# EUROPÄISCHE PATENTSCHRIFT

(11) **EP 0 880 188 B1**
(45) Veröffentlichungstag und Bekanntmachung des Hinweises auf die Patenterteilung: **10.03.2004**
(21) Anmeldenummer: 98108689.5
(22) Anmeldetag: 13.05.1998
(51) Int. Cl.: H01M 4/92, H01M 8/10, B01J 23/42, B01J 23/46, B01J 35/02, B01J 35/06

(54) **CO-toleranter Anodenkatalysator für PEM-Brennstoffzellen und Verfahren zu seiner Herstellung**
CO-tolerant anode catalyst for PEM fuel cell and its method of manufacturing
Catalyseur tolérant le CO pour cellule a combustible de type PEM et sa méthode de fabrication

(30) Priorität: 21.05.1997 DE 19721437
(43) Veröffentlichungstag der Anmeldung: 25.11.1998
(73) Patentinhaber: Umicore AG & Co. KG, 63457 Hanau-Wolfgang (DE)
(72) Erfinder: Auer, Emmanuel, Dr., 60528 Frankfurt (DE); Freund, Andreas, Dr., 63801 Kleinostheim (DE); Lehmann, Thomas, Dr., 63505 Langenselbold (DE); Starz, Karl-Anton, Dr., 63517 Rodenbach (DE); Schwarz, Robert, Dr., 63517 Rodenbach (DE); Stenke, Udo, Dr., 63814 Mainaschaff (DE)
(74) Vertreter: Stellbrink, Axel

(56) Entgegenhaltungen:
- EP-A- 0 026 995
- EP-A- 0 050 300
- JP-A- 9 153 366
- PATENT ABSTRACTS OF JAPAN vol. 014, no. 216 (E-0924), 8. Mai 1990 (1990-05-08) & JP 02 051865 A (MATSUSHITA ELECTRIC IND CO LTD), 21. Februar 1990 (1990-02-21)
- PATENT ABSTRACTS OF JAPAN vol. 015, no. 280 (E-1090), 16. Juli 1991 (1991-07-16) & JP 03 097232 A (HITACHI LTD), 23. April 1991 (1991-04-23)
- PATENT ABSTRACTS OF JAPAN vol. 011, no. 136 (C-419), 30. April 1987 (1987-04-30) & JP 61 274747 A (HITACHI LTD), 4. Dezember 1986 (1986-12-04)

## Beschreibung

Die Erfindung betrifft einen Platin-Trägerkatalysator für die Anode einer PEM-Brennstoffzelle mit guter Resistenz gegen Vergiftung durch Kohlenmonoxid. Der Katalysator enthält die Edelmetalle Platin und Ruthenium auf einem feinteiligen, leitfähigen Trägermaterial. Er ist besonders als Anodenkatalysator von Brennstoffzellen mit einer Polymerelektrolytmembran geeignet.

Brennstoffzellen sind im Prinzip gasbetriebene Batterien, bei denen die aus der Reaktion von Wasserstoff und Sauerstoff gewonnene Energie direkt in elektrische Energie umgesetzt wird. Die vorliegende Erfindung beschreibt die Herstellung von Katalysatoren für Brennstoffzellen, insbesondere die Herstellung von Trägerkatalysatoren auf der Basis von Platin- und Platinlegierungen für PEM-Brennstoffzellen (PEM = Polymerelektrolytmembran). Dieser Brennstoffzellentyp gewinnt wegen seiner hohen Energiedichte und Robustheit zunehmende Bedeutung für die Verwendung im mobilen Bereich, d.h. für den Einsatz in Kraftfahrzeugen zur Elektrotraktion.

Die Vorteile eines mit Brennstoffzellen betriebenen Autos liegen bei den sehr niedrigen Emissionen sowie dem hohen Wirkungsgrad im Vergleich zu konventionellen Verbrennungsmaschinen. Wird als Brenngas Wasserstoff verwendet, entsteht als einzige Emission Wasser auf der Kathodenseite der Zelle. Es handelt sich dann um ein sogenanntes ZEV (Zero Emission Vehicle). Wasserstoff ist jedoch zum gegenwärtigen Zeitpunkt noch zu teuer und bereitet Probleme bei der Speicherung und bei der Betankung von Fahrzeugen. Aus diesem Grund gewinnt die Alternative, den Wasserstoff direkt an Bord des Fahrzeuges durch Reformieren von Methanol zu erzeugen, zunehmend an Bedeutung. Das im Fahrzeugtank gespeicherte Methanol wird in einem Dampfreformierungsprozeß bei 200 - 300°C in ein wasserstoffreiches Brenngas mit Kohlendioxid und Kohlenmonoxid als Nebenbestandteile umgewandelt. Nach Umsetzung des Kohlenmonoxides durch Shift-Reaktion, Preferential-Oxidation (PROX) oder andere Reinigungsverfahren wird dieses Brenngas direkt der Anodenseite der PEM-Brennstoffzelle zugeleitet. Das Reformatgas besteht theoretisch aus 75 Vol.-% Wasserstoff und 25 Vol.-% Kohlendioxid. In der Praxis enthält dieses Gas jedoch noch Stickstoff, Sauerstoff und, je nach Reinigungsgrad, wechselnde Mengen an Kohlenmonoxid (bis zu 1 Vol.-%).

Als Katalysatoren auf der Anoden- und Kathodenseite der PEM-Brennstoffzelle werden Trägerkatalysatoren auf der Basis von Platin- und Platinlegierungen verwendet. Diese bestehen aus feinen Edelmetallpartikeln, die auf einem leitfähigen Trägermaterial (meist Ruß oder Graphit) abgeschieden sind. Der Gehalt an Edelmetall liegt zwischen 10 bis 40 Gew.-%, der Anteil des leitfähigen Trägermaterials entsprechend zwischen 60 bis 90 Gew.-%. Die Kristallitgröße der Partikel, gemessen mittels Röntgendiffraktometrie (XRD), beträgt ca. 2 bis 10 nm.

Herkömmliche Platinkatalysatoren sind gegen eine Vergiftung durch Kohlenmonoxid sehr empfindlich, daher muß der CO-Gehalt des Brenngases auf < 10 ppm abgesenkt werden, um Leistungseinbußen der Brennstoffzellen durch eine Vergiftung des Anodenkatalysators zu verhindern. Dies gilt insbesondere für die PEM-Brennstoffzelle, die mit ihren niedrigen Arbeitstemperaturen von 70 bis 100°C besonders empfindlich gegen CO-Vergiftung ist.

Die vorliegende Erfindung befaßt sich mit der Herstellung von Trägerkatalysatoren auf der Basis von Platin und Ruthenium, die eine hohe Resistenz gegen eine Vergiftung durch Kohlenmonoxid aufweisen. CO-Gehalte von über 100 ppm im Reformatgas sollen möglich sein und zu keiner merklichen Leistungseinbuße der PEM-Brennstoffzelle führen. Durch die Verwendung solcher neuartiger Katalysatoren auf der Anodenseite der PEM-Brennstoffzelle kann die Anzahl der notwendigen Prozeßschritte zur Entfernung von Kohlenmonoxid aus dem Brenngases vermindert werden. Dies führt zu einer erheblichen Senkung der Systemkosten, zu einer Verbesserung des Systemwirkungsgrades sowie zu einer Verkleinerung des Gesamtsystems. Die neuen Katalysatoren sind daher von großer Bedeutung für die Einführung der PEM- Brennstoffzelle im mobilen Bereich.

Das Problem der Vergiftung von Platinkatalysatoren durch Kohlenmonoxid ist seit langem bekannt. CO wird aufgrund seiner speziellen Molekülstruktur an der Oberfläche des Platins adsorbiert und blockiert so den Zugang der Wasserstoffmoleküle des Brenngases zu den katalytisch aktiven Platin-Zentren.

Durch Zusatz von Wasser kann das adsorbierte Kohlenmonoxid zu Kohlendioxid oxidiert werden und läßt sich dann von der Katalysatoroberfläche entfernen. Es ist auch bekannt, die Toleranz des Platinkatalysators gegenüber einer Vergiftung durch Kohlenmonoxid durch Legieren oder Dotieren des Platins mit Ruthenium zu verbessern.

L. W. Niedrach et.al. (J. Electrochemical Techn. 5, 1967, S.318) beschreiben die Verwendung von Pt/Ru-Katalysatoren als CO-tolerante Anodenkatalysatoren für schwefelsaure Brennstoffzellen. Diese Materialien bestehen aus feinen Pt/Ru-Legierungspulvern mit hohen spezifischen Oberflächen. Sie werden über den sogenannten ADAMS-Prozess in einer Schmelze aus Platinchlorid, Ruthenium und Natriumnitrat bei 500°C hergestellt. Aufgrund der hohen Temperaturen bei der Herstellung liegen diese Katalysatoren als Pt/Ru-Legierungen vor. Die Materialien sind nicht auf einem Träger fixiert und stellen damit keine Trägerkatalysatoren dar. Auch über ihre Verwendung in PEM-Brennstoffzellen liegen keine Angaben vor.

Pt/Ru-Trägerkatalysatoren sind seit einiger Zeit auch kommerziell erhältlich. So bietet die Fa. ETEK, Inc., Natick, Massachusetts (USA) entspechende Materialien für den Einsatz als Anodenkatalysatoren bei PEM-Brennstoffzellen an.

Es handelt sich hierbei um einen Pt/Ru-Legierungskatalysator mit Edelmetallbeladungen zwischen 5 und 40 Gew.-% und einem Pt/Ru-Atomverhältnis von 1:1. Dieser Katalysator weist eine einheitliche, durch XRD nachweisbare, Legierungsphase auf. Er zeigt jedoch eine unbefriedigende Toleranz gegenüber Kohlenmonoxid, insbesondere bei Konzentrationen an Kohlenmonoxid über 100 ppm und Sauerstoffresten im Brenngas.

In einer neueren Arbeit von M. Iwase und S. Kawatsu wird über die Entwicklung eines CO-toleranten Anodenkatalysators berichtet (M. Iwase und S. Kawatsu, Electrochemical Society Proceedings , Volume 95-23, S. 12). In dieser Arbeit wurden die besten Ergebnisse mit einem Pt/Ru-Legierungskatalysator erzielt, der über einen speziellen Temperprozeß zur Legierungsbildung hergestellt wurde. Der Spannungsabfall bei einer Stromdichte von 0,4 A/cm² betrug bei einem CO-Gehalt von 100 ppm trotzdem noch ca. 200 mV. Dies ist für einen praktischen Betrieb noch zu hoch. Mit einem unlegierten Pt/Ru-System wurden dagegen noch schlechtere Ergebnisse erzielt, so daß man aufgrund dieser Angaben davon ausgehen muß, daß nur legierte Pt/Ru-Trägerkatalysatoren die besten Ergebnisse hinsichtlich der CO-Toleranz in der PEM-Brennstoffzelle ergeben.

Es ist Aufgabe der vorliegenden Erfindung, Trägerkatalysatoren bereitzustellen, die eine verbesserte Toleranz gegenüber Kohlenmonoxid, insbesondere bei Gehalten über 100 ppm, aufweisen. Die Katalysatoren sollen für einen Betrieb mit kohlenmonoxid-, stickstoff- und sauerstoffhaltigen Brenngasen geeignet sein und einen möglichst geringen Spannungsabfall bei hohehStromdichten zeigen.

Die Aufgabe wird gelöst, durch einen Platin-Trägerkatalysator für die Anode einer PEM-Brennstoffzelle mit guter Resistenz gegen Vergiftung durch Kohlenmonoxid, enthaltend die Edelmetalle Platin und Ruthenium auf einem feinteiligen, leitfähigen Trägermaterial. Der Katalysator ist dadurch gekennzeichnet, daß die beiden Edelmetalle nicht miteinander legiert sind. Sie liegen vielmehr in hochdisperser Form auf dem Trägermaterial vor, wobei die Kristallitgröße des Platins kleiner 2 nm und die des Rutheniums kleiner 1 nm ist.

Überraschenderweise hat sich gezeigt, daß diese erfindungsgemäßen, nicht legierten Pt/Ru-Trägerkatalysatoren, die durch ein spezielles, die Legierungsbildung unterdrückendes Verfahren hergestellt werden, eine sehr gute CO-Toleranz für Konzentrationen bis zu 150 ppm CO aufweisen.

Die Ursachen für die verbesserte CO-Toleranz des Katalysators sind noch nicht völlig aufgeklärt. Eine mögliche Erklärung besteht darin, daß der geschwindigkeitsbestimmende Schritt der CO-Oxidation nicht die Reaktion mit dem Sauerstoff der Ru-Oberfläche, sondern die Diffusion des CO auf der Katalysatoroberfläche ist. Wenn der Abstand der Ptund Ru-Kristallite klein ist, also eine hohe Dispersion beider Metalle vorliegt, kann die Diffusion des CO rasch erfolgen. Die Oxidationseigenschaften des Katalysators werden dadurch positiv beeinflußt.

Bei einer Legierungsbildung der beiden Metalle kommt es dagegen zu einem Austausch der Gitterplätze, wodurch ein Teil des Rutheniums nicht mehr an der Partikeloberfläche zur Verfügung steht.

Das Verfahren zur Herstellung der erfindungsgemäßen Pt/Ru-Trägerkatalysatoren ist speziell darauf abgestimmt, eine Legierungsbildung der Edelmetalle zu verhindern und gleichzeitig eine hohe Dispersion zu erzielen.

Zur Abscheidung von Platin und Ruthenium auf dem Trägermaterial wird es zunächst in Wasser suspendiert. Zu dieser Suspension fügt man wäßrige Lösungen der Vorläuferverbindungen der Edelmetalle Platin und/oder Ruthenium hinzu und stellt den pH-Wert der Suspension aus Trägermaterial und Edelmetallösung durch Zugabe von Lauge auf einen Wert zwischen 7 und 9 ein. Außerdem wird die Temperatur der Suspension vor oder nach Zugabe der Edelmetallverbindungen auf einen konstanten Wert zwischen 50 und 80°C angehoben. Anschließend werden Platin und/oder Ruthenium durch Reduktion mit einem Reduktionsmittel vollständig auf dem Trägermaterial abgeschieden, der so erhaltene Katalysator wird abfiltriert, gewaschen und getrocknet.

Ein Hochtemperatur-Temperprozess, wie er zur Erzeugung von Legierungen zum Einsatz kommt, wird vermieden. Als Temperung und Trocknung hat sich die Vakuumtrocknung bei Temperaturen bis zu max. 200°C bewährt.

Die beiden Edelmetalle können entweder simultan oder in beliebiger Reihenfolge nacheinander auf dem Trägermaterial abgeschieden werden. Wurde eine sequentielle Abscheidung gewählt, so wird das zweite Edelmetall vor dem Trocknen des Katalysators in gleicher Weise wie das erste Edelmetall auf dem Trägermaterial abgeschieden.

Als Reduktionsmittel wird bevorzugt ein aldehydgruppenhaltiges Reduktionsmittel wie Formaldehyd oder Natriumformiat eingesetzt.

Als leitfähiges Trägermaterial kommen Ruß, graphitierter Ruß, Graphit oder Aktivkohle mit spezifischen Oberflächen (BET) von etwa 40 bis 1500 m²/g zum Einsatz. Die Abscheidung der Edelmetalle erfolgt durch chemische Reduktion der entsprechenden Platin- und Rutheniumsalze aus wäßriger Lösung. Es können dabei chlorhaltige Ausgangsverbindungen wie Hexachloroplatinsäure und Rutheniumchlorid sowie chlorfreie Verbindungen ,z.B. Platinnitrat, Platinsulfitsäure oder Rutheniumnitrosylnitrat verwendet werden. Der Anteil von Platin und Ruthenium liegt zwischen 10 und 40 Gew.-%, der des leitfähigen Trägermaterials zwischen 60 und 90 Gew.-%. Das Atomverhältnis Platin/Ruthenium liegt zwischen 1 : 4 und 4 : 1, bevorzugt zwischen 1 : 1 und 2 : 1.

Der erfindungsgemäße Katalysator kann zur Herstellung verschiedener Komponenten für PEM-Brennstoffzellen verwendet werden. Einige Beispiele zeigen die Figuren 1 bis 3:
- Figur 1:: Gasdiffusionselektrode aus poröser Katalysatorschicht auf hydrophobiertem, leitfähigen Substratmaterial
- Figur 2:: Mit Katalysator beschichtete, protonenleitende Polymermembran.
- Figur 3:: Membran-Elektroden-Einheit für PEM-Brennstoffzellen.

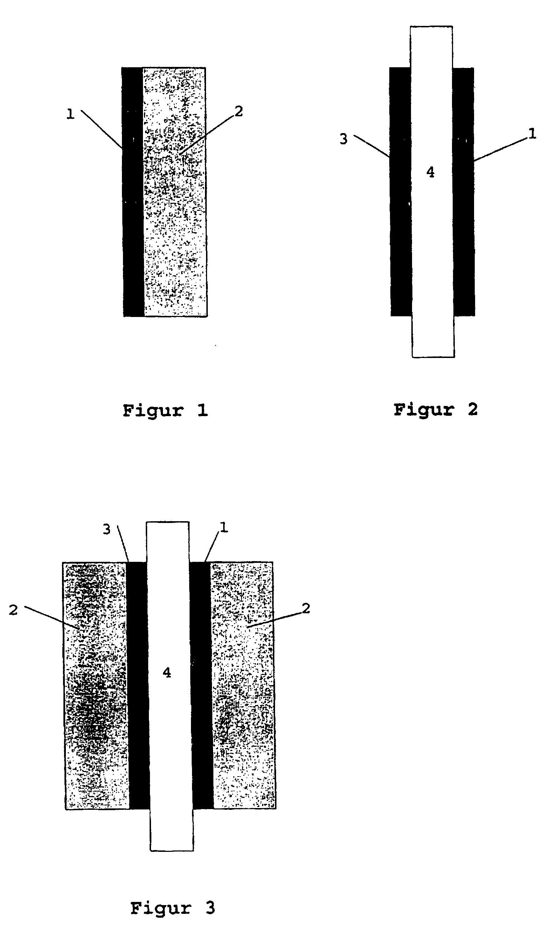

Zum einen ist es möglich, sogenannte Gasdiffusionselektroden herzustellen, die den Katalysator enthalten (siehe Figur 1). Solche Elektroden bestehen aus einem hydrophobierten, leitfähigen Substratmaterial (2) (zum Beispiel hydrophobiertes Kohlepapier), auf dem eine poröse Katalysatorschicht (1) aufgebracht ist.

Mit Hilfe dieser Gasdiffusionselektroden können die in Figur 3 dargestellten Membran-Elektroden-Einheiten für PEM-Brennstoffzellen aufgebaut werden, indem die Polymermembran (4) auf beiden Seiten mit solchen Gasdiffusionselektroden in Kontakt gebracht wird. Für die Anodenseite wird dabei eine Gasdiffusionselektrode verwendet, die den erfindungsgemäßen Anodenkatalysator (1) enthält. Die Gegenelektrode enthält den Kathodenkatalysator (3).

Alternativ hierzu kann die Polymermembran auch ohne den Zwischenschritt über die Herstellung einer separaten Gasdiffusionselektrode mit Gasdiffusionselektroden belegt werden. In einem ersten Schritt wird dabei, wie in Figur 2 gezeigt, die Polymermembran (4) auf beiden Seiten mit den Katalysatorschichten (1,3) versehen, von denen eine den erfindungsgemäßen Anodenkatalysator (1) enthält. Durch Kontaktieren der Katalysatorschichten mit hydrophobiertem Kohlepapier wird daraus eine komplette Membran-Elektroden-Einheit.

Die erfindungsgemäßen Katalysatoren der folgenden Beispiele wurden mittels Röntgenspektroskopie (XRD) und Analytik charakterisiert. Anschließend wurden sie zu einer Gasdiffusionselektrode und einer Membran-Elektrodeneinheit (MEE) verarbeitet, wobei die Katalysatoren auf der Anodenseite der MEE eingesetzt wurden.

Die Bestimmung der CO-Toleranz erfolgte in einer PEM-Brennstoffzelle mit einem Zellenformat von 25 cm². Als Anodenbrenngas wurde ein simuliertes Methanolreformatgas der Zusammensetzung 50 - 60 Vol.-% Wasserstoff, 10 - 15 Vol.-% Stickstoff, 20 - 25 Vol.-% Kohlendioxid und 0 - 5 Vol.-% Sauerstoff verwendet. Der Spannungsabfall ΔU (mV), der nach der Zudosierung einer bestimmten Menge CO auftritt, stellt ein Maß für die CO-Toleranz des Katalysators dar. Je kleiner dieser Spannungsabfall ist, desto besser ist die CO-Toleranz des Katalysators. Die erfindungsgemäßen Katalysatoren zeigen in der Regel ΔU-Werte, die um bis zu 50% besser sind als die Vergleichswerte des kommerziell erhältlichen Katalysators.

Die nachfolgenden Beispiele sollen die Erfindung näher erläutern.

### Beispiel 1:

### Erfindungsgemäßer Pt/Ru-Trägerkatalysator

Zu einer Suspension von 81,1 g Ruß Vulcan XC 72 (Restfeuchtegehalt 1,39 Gew.%) in 2000 ml deionisiertem Wasser gibt man unter gutem Rühren bei Raumtemperatur innerhalb von 10 min eine Lösung von 52,7 g Hexachloroplatinsäure (25 Gew.-% Pt) und 48,4 g Ruthenium-(III)-Chloridlösung (14 Gew.-% Ru) in 200 ml deionisiertem Wasser. Man erwärmt auf 80°C und stellt mit Natronlauge einen pH-Wert von 8,5 ein. Nach Zugabe von 27,2 ml einer wäßrigen Formaldehydlösung (37 Gew.-%) wird abfiltriert, der feuchte Filterkuchen mit 2000 ml deionisiertem Wasser gewaschen und bei 80 °C im Vakuumtrockenschrank getrocknet.

Die analytischen Daten des Katalysators sind:

| | |
|---|---|
| Pt-Gehalt | 13,18 Gew.% |
| Ru-Gehalt | 6,82 Gew.% |
| Atomverhältnis Pt/Ru | 1:1 |

Der Katalysator wurde mittels XRD charakterisiert. Man erhält den (110)-Reflex des Platins bei etwa 2Theta = 40°. Eine Verschiebung des Reflexes, die auf eine Legierungsbildung hinweisen könnte, ist nicht zu erkennen. Dagegen ist der (111)-Reflex des Rutheniums bei 2Theta=44° deutlich sichtbar.

Die Kristallitgröße des Platins liegt bei etwa 1,5 nm, die des Rutheniums unterhalb von 1 nm.

Der Katalysator wird unter Verwendung einer Lösung von NAFION® zu einer Tinte verarbeitet und in dieser Form auf ein leitfähiges hydrophobiertes Kohlepapier (Fa. TORAY, TGC 90) aufgebracht. Die Belegung beträgt 0,16 mg Edelmetall pro cm². Die so hergestellte Anode wird mit einer ionenleitfähigen Membran (Nafion® 117) und einer Kathoden-Elektrode (Belegung 0,3 mg Pt/cm²) zusammen heiß verpreßt und so eine Membran-Elektroden-Einheit (MEE) hergestellt.

Die Messung erfolgt in einer PEM-Einzelzelle (Druckloser Betrieb, Temperatur 75°C) , wobei eine Stromdichte von 0,5 A/cm² eingestellt wird.

Der Spannungsabfall ΔU, der nach der Zudosieren von 100 bzw. 120 ppm CO zum Brenngas auftritt, wird als Maß für die CO-Toleranz des Katalysators herangezogen.

### Ergebnis:

| | |
|---|---|
| Brenngaszusammensetzung: | 58 Vol.-% H₂; 15 Vol.-% N₂ |
| | 24 Vol.-% CO₂, 3 Vol.-% O₂ |
| CO-Konzentration: | 100 ppm |
| Spannungsabfall (ΔU) | 41 mV |
| CO-Konzentration: | 120 ppm |
| Spannungsabfall (ΔU) | 72 mV |

Die Werte für den Spannungsabfall ΔU liegen etwa um den Faktor 2 niedriger als beim Vergleichskatalysator von Vergleichsbeispiel 1. Darin zeigt sich die verbesserte CO-Toleranz des Katalysators.

### Beispiel 2:

### Erfindungsgemäßer Pt/Ru-Trägerkatalysator

Zu einer Suspension von 80,6 g Vulcan XC72 (Restfeuchte 0,8 Gew.-%) in 2000 ml deionisiertem Wasser gibt man bei Raumtemperatur innerhalb von 10 min unter gutem Rühren eine Lösung von 43,2 g Platinnitrat (30,5 Gew.-% Pt) und 34,1 g Ruthenium-Nitrosylnitratlösung (20 Gew.-% Ru) in 200 ml deionisiertem Wasser. Man erwärmt auf 80°C und stellt mit Natronlauge einen pH-Wert von 8,5 ein. Nach Zugabe von 27,2 ml einer wäßrigen Formaldehydlösung (37 Gew.-%) wird abfiltriert, der feuchte Filterkuchen mit 2000 ml deionisiertem Wasser gewaschen und der Katalysator bei 100 °C im Vakuum getrocknet.

### Analytische Daten:

| | |
|---|---|
| Pt-Gehalt: | 13,18 Gew.-% |
| Ru-Gehalt: | 6,82 Gew.-% |
| Atomverhältnis Pt/Ru: | 1:1 |
| Pt-Kristallitgröße (XRD) | < 1,5 nm |
| Ru-Kristallitgröße (XRD) | < 1 nm |

Auch hier zeigt die Röntgenanalyse des Katalysators das Vorliegen eines unlegierten Systems.

Der Katalysator wird, wie in Beispiel 1 beschrieben, zu einer Gasdiffusionselektrode und einer Membran-Elektrodeneinheit verarbeitet und in einer PEM-Brennstoffzelle unter identischen Bedingungen vermessen. Die Zusammensetzung des Brenngases entspricht Beispiel 1.

### Ergebnisse:

| | |
|---|---|
| CO-Konzentration: | 100 ppm |
| Spannungsabfall (Δ U) | 40 mV |
| CO-Konzentration: | 120 ppm |
| Spannungsabfall (Δ U) | 67 mV |

Auch hier zeigt sich die verbesserte CO-Toleranz des erfindungsgemäßen Katalysators im Vergleich zu Vergleichsbeispiel 1.

### Beispiel 3:

### Erfindungsgemäßer Pt/Ru-Trägerkatalysator

Zu einer Suspension von 40,65 g Vulcan XC72 (Restfeuchte 1,6 Gew.-%) in 1500 ml deionisiertem Wasser gibt man bei 80°C eine Lösung von 26,5 g Platinnitratlösung (30 Gew.-%) in 100 ml deionisiertem Wasser und stellt anschließend mit Natronlauge einen pH-Wert von 8 ein. Nach Zugabe von 10,8 ml einer wäßrigen Formaldehydlösung (37 Gew.-%) wird abfiltriert und der feuchte Filterkuchen mit 3000 ml deionisiertem Wasser gewaschen.

Man suspendiert den feuchten Katalysator erneut in 1000 ml deionisiertem Wasser und gibt bei Raumtemperatur 30 g Rutheniumnitrosylnitratlösung (6,86 Gew.-% Ru) in 100 ml deionisiertem Wasser hinzu. Nach Erwärmen auf 80°C wird mit Natronlauge ein pH-Wert von 7 eingestellt. Nach der Reaktion wird abfiltriert, der feuchte Filterkuchen mit 1000 ml deionisiertem Wasser gewaschen und bei 80°C im Vakuum getrocknet.

### Analytische Daten:

| | |
|---|---|
| Pt-Gehalt: | 15,9 Gew.-% |
| Ru-Gehalt: | 4,1 Gew.-% |
| Atomverhältnis Pt/Ru: | 2:1 |
| Pt-Kristallitgröße (XRD) | 1,8 nm |
| Ru-Kristallitgröße (XRD) | < 1 nm |

Aufgrund der Röntgenanalyse liegt ein unlegiertes Pt/Ru-System vor. Der Katalysator wird , wie in den früheren Beispielen zu einer MEE verarbeitet und in einer PEM-Brennstoffzelle bezüglich seiner CO-Toleranz untersucht.

### Ergebnisse:

| | |
|---|---|
| CO-Konzentration: | 100 ppm |
| Spannungsabfall (ΔU) | 45 mV |
| CO-Konzentration: | 120 ppm |
| Spannungsabfall (ΔU) | 89 mV |

Auch hier zeigt sich die verbesserte CO-Toleranz im Vergleich mit Vergleichsbeispiel 1.

### Vergleichsbeispiel 1:

Für Vergleichsversuche wird ein kommerziell erhältlicher Pt/Ru-Trägerkatalysators (EM-Gehalt 20 Gew.-%, Pt/Ru-Atomverhältnis 1:1) herangezogen. Er repräsentiert den Stand der Technik auf diesem Gebiet.

Die Röntgenanalyse (XRD) an diesem Material belegt klar das Vorliegen eines legierten Pt/Ru-Systems. Man erhält eine Verschiebung des Pt(111) Reflexes, was auf eine feste Lösung von Ru in Pt hinweist, entsprechende Reflexe von reinem Ru sind nicht vorhanden. Die Kristallitgröße (XRD) der Pt/Ru-Kristallite liegt bei 2,7 nm.

Der Katalysator wird unter Verwendung einer Lösung von NAFION® zu einer Tinte verarbeitet und in dieser Form auf ein leitfähiges hydrophobiertes Kohlepapier aufgebracht. Die Belegung beträgt 0,18 mg Edelmetall/cm².

Anschließend wird diese Elektrode als Anode mit einer ionenleitfähigen Membran (NAFION® 117) und einer Kathodenelektrode (Belegung 0,3 mgPt/cm²) zusammen verpreßt und so eine Membran-Elektroden-Einheit (MEE) hergestellt. Die Messung erfolgt in einer PEM-Einzelzelle (druckloser Betrieb, Temperatur 75°C), wobei eine Stromdichte von 0,5 A/cm² eingestellt wird.

### Ergebnisse:

| | |
|---|---|
| Brenngaszusammensetzung: | 57 Vol.-% H₂, 15 Vol.-% N₂, |
| | 25 Vol.-% CO₂, 3 Vol.-% O₂ |
| CO-Konzentration: | 100 ppm |
| Spannungsabfall (ΔU) | 80 mV |
| CO-Konzentration: | 120 ppm |
| Spannungsabfall (ΔU) | 128 mV |

Die Werte für den Spannungsabfall bei Zusatz von CO liegen etwa um den Faktor zwei über den Werten der erfindungsgemäßen Katalysatoren. insbesondere bei CO-Konzentrationen über 100 ppm zeigt sich die Überlegenheit der neuen Katalysatoren.

## Patentansprüche

1. Platin-Trägerkatalysator für die Anode einer PEM-Brennstoffzelle mit guter Resistenz gegen Vergiftung durch Kohlenmonoxid, enthaltend die Edelmetalle Platin und Ruthenium auf einem feinteiligen, leitfähigen Trägermaterial,
**dadurch gekennzeichnet,**
**daß** die beiden Edelmetalle nicht miteinander legiert sind und in hochdisperser Form auf dem Trägermaterial vorliegen, wobei die Kristallitgröße des Platins kleiner 2 nm und die des Rutheniums kleiner 1 nm ist.

2. Trägerkatalysatoren nach Anspruch 1,
**dadurch gekennzeichnet,**
**daß** das Atomverhältnis Platin/Ruthenium zwischen 1 : 4 und 4 : 1 liegt.

3. Trägerkatalysatoren nach Anspruch 1,
**dadurch gekennzeichnet,**
**daß** das leitfähige Trägermaterial aus Ruß, graphitiertem Ruß, Graphit oder Aktivkohle besteht.

4. Trägerkatalysatoren nach Anspruch 1,
**dadurch gekennzeichnet,**
**daß** der Anteil von Platin und Ruthenium zwischen 10 und 40 Gew.-% und der Anteil des leitfähigen Trägermaterials zwischen 60 und 90 Gew.-% liegt.

5. Verfahren zur Herstellung eines Trägerkatalysators nach Anspruch 1 ,
**dadurch gekennzeichnet,**
**daß** man das elektrisch leitfähige Trägermaterial in Wasser suspendiert, danach wäßrige Lösungen von löslichen Verbindungen der Edelmetalle Platin und/oder Ruthenium der Suspension zusetzt, den pH-Wert der Suspension durch Zugabe von Lauge auf 7 bis 9 anhebt, anschließend Platin und/oder Ruthenium durch Reduktion mit einem Reduktionsmittel vollständig auf dem Trägermaterial abscheidet, den so erhaltenen Katalysator abfiltriert, wäscht, gegebenenfalls das zweite Edelmetall in gleicher Weise abscheidet, und abschließend den Platin/Ruthenium-Katalysator bei einer Temperatur von nicht mehr als 200°C trocknet.

6. Verfahren nach Anspruch 5,
**dadurch gekennzeichnet,**
**daß** die Temperatur der Suspension vor oder nach Zugabe der Edelmetallverbindungen auf eine konstante Temperatur zwischen 50 und 80°C angehoben und die Abscheidung der Edelmetalle auf dem Trägermaterial bei dieser Temperatur vorgenommen wird.

7. Verfahren nach Anspruch 6,
**dadurch gekennzeichnet,**
**daß** ein aldehydgruppenhaltiges Reduktionsmittel verwendet wird.

8. Gasdiffusionselektrode für die Anodenseite einer PEM-Brennstoffzelle, enthaltend eine poröse Katalysatorschicht auf einem hydrophobierten leitfähigen Substratmaterial,
**dadurch gekennzeichnet,**
**daß** sie den Platin-Trägerkatalysator nach Anspruch 1 enthält.

9. Mit Katalysator beschichtete, protonenleitende Polymermembran für PEM-Brennstoffzellen,
**dadurch gekennzeichnet,**
**daß** die Katalysatorschicht auf der Anodenseite den Platin-Trägerkatalysator nach Anspruch 1 enthält.

10. Membran-Elektroden-Einheit für PEM-Brennstoffzellen, welche eine protonenleitende Polymermembran und beidseitig auf Kathoden- und Anodenseite angebrachte Gasdiffusionselektroden enthält,
**dadurch gekennzeichnet,**
**daß** die Katalysatorschicht auf der Anodenseite den Platin-Trägerkatalysator nach Anspruch 1 enthält.

## Claims

1. Platinum supported catalyst for the anode of a PEM fuel cell with high resistance to poisoning by carbon monoxide, containing the noble metals platinum and ruthenium on a finely divided, conductive support material, **characterised in that** the two noble metals are not alloyed with each other and are present in highly dispersed form on the support material, wherein the crystallite size of the platinum is less than 2 nm and that of the ruthenium is less than 1 nm.

2. Supported catalyst according to Claim 1, **characterised in that** the atomic ratio of platinum to ruthenium is between 1:4 and 4:1.

3. Supported catalyst according to Claim 1, **characterised in that** the conductive support material consists of carbon black, graphitised carbon black, graphite or active carbon.

4. Supported catalyst according to Claim 1, **characterised in that** the proportion of platinum and ruthenium is between 10 and 40 wt.%, and proportion of conductive support material is between 60 and 90 wt.%.

5. Process for preparing a supported catalyst according to Claim 1, **characterised in that** the electrically conductive support material is suspended in water, then aqueous solutions of soluble compounds of the noble metals platinum and/or ruthenium are added to the suspension, the pH value of the suspension is raised to 7 to 9 by adding an alkaline solution, then all of the platinum and/or ruthenium is deposited onto the support material by reducing with a reducing agent, the catalyst obtained in this way is filtered and washed and optionally the second noble metal is deposited in the same manner and then the platinum/ruthenium catalyst is dried at a temperature of not more than 200°C.

6. Process according to Claim 5, **characterised in that** the temperature of the suspension, before or after addition of the noble metal compounds, is raised to a constant temperature between 50 and 80°C and deposition of the noble metals onto the support material is performed at this temperature.

7. Process according to Claim 6, **characterised in that** an aldehyde group-containing reducing agent is used.

8. Gas diffusion electrode for the anode side of a PEM fuel cell containing a porous catalyst layer on a water-repellent, conductive substrate, **characterised in that** it contains the platinum supported catalyst according to Claim 1.

9. A proton-conducting polymer membrane for PEM fuel cells coated with a catalyst, **characterised in that** the catalyst layer on the anode side contains the platinum supported catalyst according to Claim 1.

10. Membrane electrode assembly for PEM fuel cells which contains a proton-conducting polymer membrane and has gas diffusion electrodes applied to both the cathode and anode sides, **characterised in that** the catalyst layer on the anode side contains the platinum supported catalyst according to Claim 1.

## Revendications

1. Catalyseur-support au platine pour l'anode d'une cellule à combustible PEM ayant une bonne résistance à l'empoisonnement par le monoxyde de carbone, comportant les métaux nobles platine et ruthénium sur une matière de support, conductrice; finement divisée,
**caractérisé en ce que**
les deux métaux nobles ne sont pas alliés l'un à l'autre et existent sur la matière de support sous une forme très dispersée,
la taille des cristallites du platine étant inférieure à 2 nm et celle du ruthénium inférieure à 1 nm.

2. Catalyseur-support selon la revendication 1,
**caractérisé en ce que**
le rapport atomique platine/ruthénium est compris entre 1 :4 et 4 :1.

3. Catalyseur-support selon la revendication 1,
**caractérisé en ce que**
la matière de support conductrice est formée de suie, de suie graphitée, de graphite ou de charbon actif.

4. Catalyseur-support selon la revendication 1,
**caractérisé en ce que**
la teneur en platine et en ruthénium est comprise entre 10 et 40 % en poids et la teneur en matière de support conductrice comprise entre 60 et 90 % en poids.

5. Procédé de fabrication d'un catalyseur-support selon la revendication 1,
**caractérisé en ce qu'**
on met la matière de support, conductrice électrique en suspension dans l'eau puis on ajoute des solutions aqueuses de combinaisons solubles des métaux nobles platine et/ou ruthénium en suspension, on relève le pH de la suspension par l'addition d'une lessive de soude pour passer de 7 à 9 et ensuite on dépose le platine et/ou le ruthénium par réduction avec un agent réducteur, totalement sur la matière de support, on sépare par filtrage le catalyseur ainsi obtenu, on lave et le cas échéant on dépose le second métal noble de la même manière et ensuite on sèche le catalyseur platine/ruthénium à une température qui n'est pas supérieure à 200°C.

6. Procédé selon la revendication 5,
**caractérisé en ce qu'**
on relève la température de la suspension avant ou après addition de combinaisons de métaux nobles à une température constante comprise entre 50°C et 80°C et on effectue le dépôt des métaux nobles sur la matière de support à cette température.

7. Procédé selon la revendication 6,
**caractérisé en ce qu'**
on utilise un agent réducteur contenant des groupes aldéhydriques.

8. Electrode de diffusion gazeuse pour le côté anode d'une cellule à combustible PEM comportant une couche poreuse de catalyseur sur une matière de support conductrice, hydrophobe,
**caractérisée en ce qu'**
elle comporte un catalyseur support au platine selon la revendication 1.

9. Membrane de polymère conductrice de protons, revêtue d'un catalyseur pour des cellules à combustible PEM,
**caractérisée en ce que**
la couche de catalyseur sur le côté anode contient le catalyseur support au platine selon la revendication 1.

10. Unité d'électrode-membrane pour des cellules à combustible PEM comportant une membrane en polymère conductrice de proton et des électrodes de diffusion gazeuse sur les deux faces, du côté cathode et du côté anode,
**caractérisée en ce que**
la couche de catalyseur du côté anode comporte le catalyseur support au platine selon la revendication 1.
